# FASCICULE DE BREVET EUROPEEN

(11) **EP 2 193 626 B1**
(45) Date de publication et mention de la délivrance du brevet: **26.12.2018**
(21) Numéro de dépôt: 08840527.9
(22) Date de dépôt: 24.09.2008
(51) Int. Cl.: H04L 9/32, H04L 9/18, G06K 19/077

(54) **COMMUNICATION SECURISEE ENTRE UNE ETIQUETTE ELECTRONIQUE ET UN LECTEUR**
SICHERE KOMMUNIKATION ZWISCHEN EINEM ELEKTRONISCHEN ETIKETT UND EINEM LESEGERÄT
SECURE COMMUNICATION BETWEEN AN ELECTRONIC LABEL AND A READER

(30) Priorité: 26.09.2007 FR 0706745
(43) Date de publication de la demande: 09.06.2010
(73) Titulaire: Orange, 75015 Paris (FR)
(72) Inventeur: BERBAIN, Côme, F-92120 Montrouge (FR); BILLET, Olivier, F-06140 Tourrettes sur Loup (FR); GILBERT, Henri, F-91440 Bures sur Yvette (FR)
(74) Mandataire: Cabinet Plasseraud
(86) Numéro de dépôt international: PCT/FR2008/051704
(87) Numéro de publication internationale: WO 2009/050368

(56) Documents cités:
- US-A1- 2002 049 904
- US-A1- 2005 123 133
- OHKUBO, KSUZUKI, KINOSHITA: "A cryptographic approach to privacy-friendly tags" RFID PRIVACY WORKSHOP. MIT, MASSACHUSSETS, USA, 2003, pages 1-9, XP002481180 cité dans la demande

## Description

### Domaine technique

La présente invention concerne une sécurisation des échanges entre une étiquette électronique et au moins un lecteur de ladite étiquette.

### Etat de l'art

Avec l'utilisation massive et croissante des étiquettes électroniques (par exemple des étiquettes RFID pour *"Radio Frequency IDentifiers*"*,* ou plus généralement des cartes sans contact telles que celles mettant en oeuvre des schémas de codage par exemple de type EPC pour *"Electronic Product Code*"), il se pose des problèmes de sécurité des échanges de données entre étiquettes et lecteurs.

L'un des problèmes les plus sensibles est la protection de la vie privée du porteur de l'étiquette électronique. En effet, les communications entre étiquettes électroniques et lecteurs d'étiquettes électroniques peuvent divulguer des informations importantes sur la vie de l'étiquette électronique, et, de là, sur la vie privée du porteur de ces étiquettes électroniques. L'interface radio de ces étiquettes permet une interrogation à distance furtive et expose par conséquent ces étiquettes aux attaques. De plus, l'omniprésence des réseaux de télécommunications, et donc la forte connectivité des lecteurs, et de là des étiquettes, rendent ce problème encore plus critique.

De manière générale, une étiquette A, s'authentifiant auprès d'un lecteur B, décline son identité par la communication d'un secret K_{A}, connu de l'étiquette A et du lecteur B uniquement. La preuve de l'identité peut être faite de plusieurs façons.

Dans une réalisation rudimentaire, l'étiquette A transmet simplement le secret K_{A} en clair à l'étiquette B. Dans ce cas, un attaquant est en mesure d'écouter la communication entre A et B, de récupérer le secret et de se faire passer ensuite pour l'étiquette A. La traçabilité des communications de l'étiquette A est alors totale.

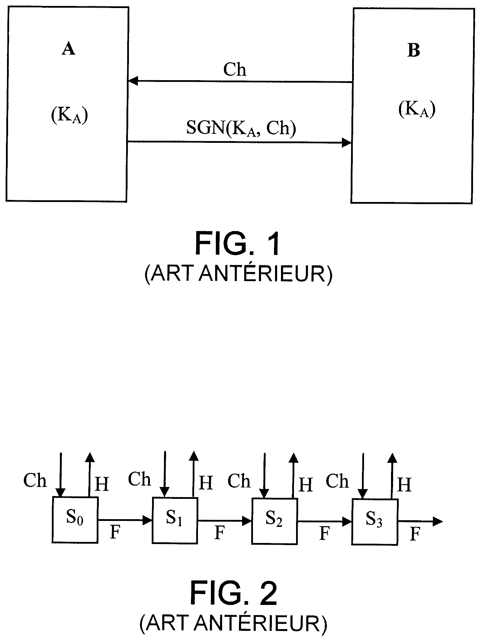

Pour surmonter cet inconvénient, dans une réalisation plus sophistiquée et illustrée sur la figure 1, le lecteur B envoie d'abord un nombre aléatoire Ch (appelé "*aléa*" ou "*challenge*") à l'étiquette A. Sur réception de cet aléa Ch, l'étiquette A signe l'aléa avec une clé secrète K_{A} et renvoie le résultat de la signature SGN(K_{A}, Ch) au lecteur B, lequel vérifie l'exactitude du calcul en le reproduisant. Il s'agit là d'un algorithme typique à clé secrète.

L'un des critères requis pour une étiquette électronique est son faible coût de fabrication. Par conséquent, une étiquette ne comporte pas autant de moyens de protection qu'une carte à puce classique pour empêcher une lecture en mémoire de son secret K_{A}. Ainsi, il est généralement possible d'ouvrir physiquement une étiquette et consulter une mémoire interne stockant une clé secrète K_{A} propre à l'étiquette. Un attaquant peut donc s'emparer frauduleusement d'une telle étiquette électronique et y lire le secret K_{A} de l'étiquette.

Un scénario d'attaque possible est alors le suivant. Un attaquant enregistre les communications entre une étiquette et un ou plusieurs lecteurs sur une période de temps donnée et s'empare ensuite de l'étiquette. Il lui est possible de déterminer le secret propre à l'étiquette et d'interpréter ensuite toutes les communications qu'il a pu enregistrer dans le passé. L'attaquant peut alors *"comprendre a posteriori"* des échanges écoutés antérieurement. L'attaquant peut savoir ainsi, par exemple, les horaires moyens de communication entre l'étiquette et un lecteur et en déduire des habitudes du porteur de l'étiquette.

Ainsi, il est souhaité que les étiquettes électroniques puissent offrir des garanties de sécurité satisfaisantes, et en particulier de *"non-traçabilité rétroactive".* La *"traçabilité"* s'entend de la capacité d'écouter et de comprendre des données échangées entre une étiquette électronique et un lecteur. Le terme *"rétroactif"* fait référence à la capacité de comprendre *a posteriori* des échanges antérieurs à l'aide d'informations secrètes piratées.

Plus généralement, une traçabilité est possible aussi en écoutant simplement la réponse que produit une étiquette à un même aléa. Dans ce cas, un attaquant se fait passer pour un lecteur et fournit toujours le même aléa à l'étiquette et celle-ci fournit toujours la même réponse. L'attaquant peut alors détecter l'étiquette à chaque réception de cette même réponse.

Pour surmonter ces inconvénients liés à la traçabilité rétroactive d'une étiquette électronique, il a été proposé dans le document :
*"*Cryptographie Approach to Privacy-Friendly Tags", M. Ohkubo, K. Suzuki et S. Kinoshita, RFID Privacy Workshop, MIT (Massachusetts, USA), 2003, l'application d'au moins une fonction de hachage comme expliqué ci-après en référence à la figure 2.

Dans cette réalisation, l'étiquette A possède une mémoire stockant une valeur courante Sᵢ (i = 0, 1, 2, 3 sur la figure 2). Lors d'une communication avec le lecteur B, l'étiquette calcule un hachage H en fonction de la valeur courante Sᵢ et de l'aléa Ch que lui envoie le lecteur B et renvoie le résultat H au lecteur. Parallèlement, l'étiquette A modifie la valeur courante Sᵢ en lui appliquant une fonction de hachage F et stocke le résultat obtenu en tant que nouvelle valeur courante Sᵢ₊₁. Cette nouvelle valeur courante Sᵢ₊₁ servira pour le calcul du hachage par la fonction H lors d'une communication ultérieure avec un lecteur. De son côté, le lecteur B comporte des moyens homologues pour la vérification du résultat H et pour la mise à jour de la valeur courante Sᵢ₊₁.

Cette solution assure que la valeur du secret K_{A} propre à l'étiquette puisse évoluer (Sᵢ, Sᵢ₊₁, Sᵢ₊₂, etc) à chaque communication avec un lecteur, les lecteurs eux-mêmes pouvant retrouver la valeur en cours Sᵢ du secret grâce à l'emploi d'une fonction à sens unique telle qu'une fonction de hachage.

Toutefois, cette solution théorique présente encore des inconvénients. La vérification par le lecteur est coûteuse en ressources de calcul. Typiquement, la complexité de vérification pour le lecteur croît de façon linéaire avec le temps (avec le nombre de mises à jour). Surtout, les calculs à effectuer par le processeur de l'étiquette sont très coûteux en ressources.

Or, les étiquettes électroniques doivent avoir un faible coût de fabrication, ce qui implique un nombre fortement réduit de portes et/ou de transistors, notamment pour des applications de grande distribution et/ou en tant que produits de grande consommation. On indique par exemple que l'accès à des services de transport en France (Ile-de-France notamment) est contrôlé par une étiquette électronique. La mise en oeuvre du document précité Ohkubo et al. dans les étiquettes pour une telle application entraînerait un coût important.

De même, l'utilisation d'un algorithme homomorphe impliquant une cryptographie asymétrique (par exemple au sens de l'algorithme RSA pour "Rivest Shamir Andleman") permettrait de surmonter les problèmes de traçabilité précités mais, là encore, les ressources nécessaires pour les calculs seraient prohibitives. Par exemple, la clé secrète, déjà, devrait être stockée sur 1024 bits pour qu'un algorithme de type RSA soit efficace, alors qu'un nombre de bits toléré pour les calculs dans une étiquette électronique classique est au plus de l'ordre de 256 bits.

Il apparaît donc que les seules techniques de l'art antérieur qui seraient capables d'assurer la non-traçabilité rétroactive nécessitent beaucoup de ressources de calcul, ce qui entraînerait un coût de fabrication particulièrement élevé pour une étiquette électronique.

Il convient de prendre en compte en outre les documents de l'état de l'art US 2005/123133 et US 2002/049904

La présente invention vient améliorer la situation.

### Présentation de l'invention

Elle propose à cet effet un procédé de communication entre une étiquette électronique et un lecteur, notamment pour une authentification de l'étiquette auprès du lecteur, dans lequel :
- le lecteur envoie au moins une donnée à l'étiquette,
- l'étiquette calcule une combinaison au moins entre la donnée du lecteur et un secret propre à l'étiquette, et communique le résultat de la combinaison au lecteur pour vérification.

Selon l'invention, la combinaison précitée est calculée en utilisant une valeur courante de secret obtenue parmi une succession de valeurs pseudo-aléatoires de secret propres à l'étiquette et déterminables par le lecteur, une même valeur courante de secret étant destinée à être utilisée par l'étiquette un nombre de fois limité.

Ainsi, au sens de l'invention, un secret de l'étiquette peut être obtenu par exemple à l'aide d'un nombre tiré par un générateur pseudo-aléatoire de nombres intégré dans l'étiquette. Le secret de l'étiquette est donc évolutif et mis à jour régulièrement, par exemple à chaque communication entre le lecteur et l'étiquette (auquel cas le nombre de fois limité, précité, vaut un). De son côté, le lecteur peut comporter (ou simplement avoir accès à) un générateur pseudo-aléatoire qui opère de façon coordonnée avec le générateur pseudo-aléatoire de l'étiquette (par exemple à chaque communication entre le lecteur et l'étiquette) pour que la valeur courante du secret de l'étiquette soit connue du lecteur, ce qui lui permet de vérifier la combinaison précitée que lui envoie l'étiquette.

Par ailleurs, cette combinaison peut correspondre à un chiffrement à flot des données du lecteur (par exemple un aléa qu'envoie initialement le lecteur) à l'aide d'une clé qui correspond à la valeur courante du secret de l'étiquette. Grâce à la mise en oeuvre de l'invention, la clé de chiffrement est mise à jour par l'équivalent d'une fonction à sens unique, ce qui garantit la non-traçabilité rétroactive. Toutefois, cet équivalent d'une fonction à sens unique n'est pas aussi coûteux en termes de ressources de calcul qu'une fonction de hachage au sens du document précité Ohkubo et al. Typiquement, le nombre de portes équivalent (portes NAND ou autres) nécessaire à une mise en oeuvre de l'invention avec un générateur pseudo-aléatoire et chiffrage à flot est de l'ordre de 2000 alors qu'il est de l'ordre de 5000 dans la réalisation décrite dans le document Ohkubo et al.

La mise en oeuvre de l'invention dans une étiquette électronique peut donc être réalisée simplement en logique câblée, avec peu de capacités de calcul car elle ne requiert qu'un très faible nombre d'opérations extrêmement simples.

L'invention permet néanmoins de remédier non seulement au problème de la confidentialité lors de l'authentification, mais aussi au problème de la traçabilité et trouve donc des applications dans la quasi-totalité des domaines d'utilisation des étiquettes électroniques.

### Présentation des figures

D'autres caractéristiques et avantages de l'invention apparaîtront à l'examen de la description détaillée ci-après et des dessins annexés sur lesquels, outre les figures 1 et 2 précédemment commentées :
- la figure 3A illustre les étapes mises en oeuvre auprès d'une étiquette électronique, dans un exemple de réalisation de l'invention,
- la figure 3B illustre les étapes mises en oeuvre auprès d'un lecteur d'étiquette électronique au sens de l'invention, dans un exemple de réalisation de l'invention où l'étiquette ne coopère qu'avec un seul lecteur,
- la figure 4 illustre une réalisation plus sophistiquée que celle illustrée sur la figure 3B, mise en oeuvre avantageusement dans le cas où l'étiquette peut coopérer avec plusieurs lecteurs,
- la figure 5 illustre une gestion avantageuse d'une pluralité d'étiquettes électroniques capables de coopérer avec une pluralité de lecteurs d'étiquette,
- la figure 6 illustre un exemple de protocole de communication avantageux, pour une authentification d'étiquette, mettant en oeuvre l'invention,
- la figure 7 illustre un exemple de combinaison au sens de l'invention du secret Sᵢ de l'étiquette et de données Ch reçues du lecteur, mettant avantageusement en oeuvre un générateur pseudo-aléatoire G, et
- les figures 8A et 8B illustrent respectivement une succession de valeurs pseudo-aléatoires à disposition d'une étiquette A et une succession de valeurs pseudo-aléatoires à disposition d'un lecteur B.

### Description détaillée

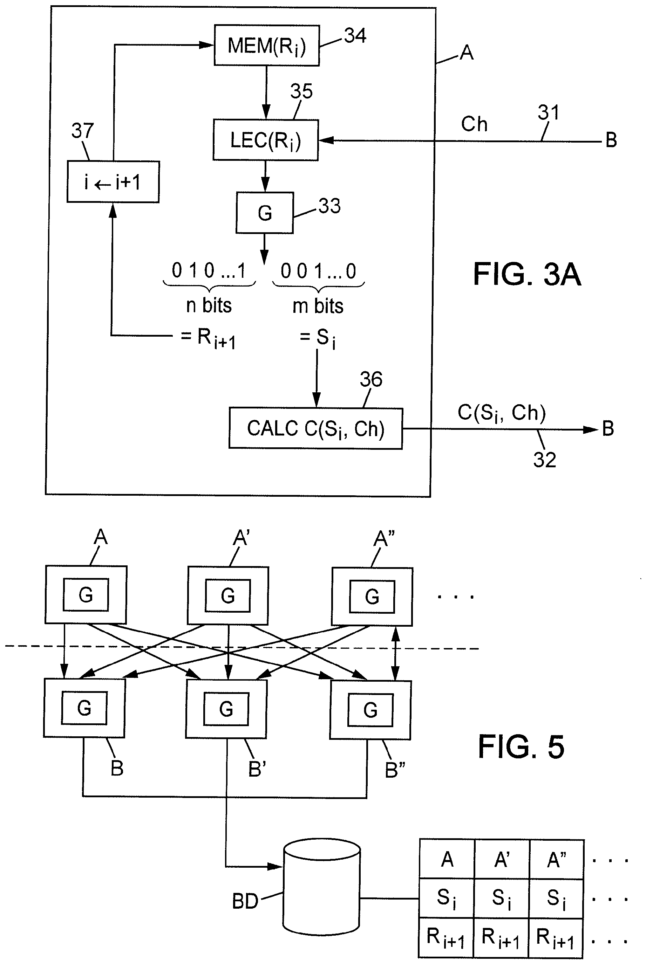

On se réfère tout d'abord à la figure 3A, représentant les opérations mises en oeuvre, au sens de l'invention, par une étiquette électronique A pour s'authentifier auprès d'un lecteur B. L'étiquette A comporte typiquement un circuit en logique câblée et éventuellement une mémoire de travail et/ou de stockage (non représentés) qui sont actifs lorsque l'étiquette est alimentée électriquement. Dans l'exemple décrit, l'alimentation électrique de l'étiquette s'effectue grâce à un courant électrique induit (comme dans une étiquette RFID) à chaque fois que l'étiquette A est approchée physiquement du lecteur B. Ainsi, dans l'exemple décrit, les opérations effectuées par l'étiquette (figure 3A notamment) ont lieu à chaque alimentation électrique de l'étiquette pour une communication avec le lecteur qui l'alimente électriquement.

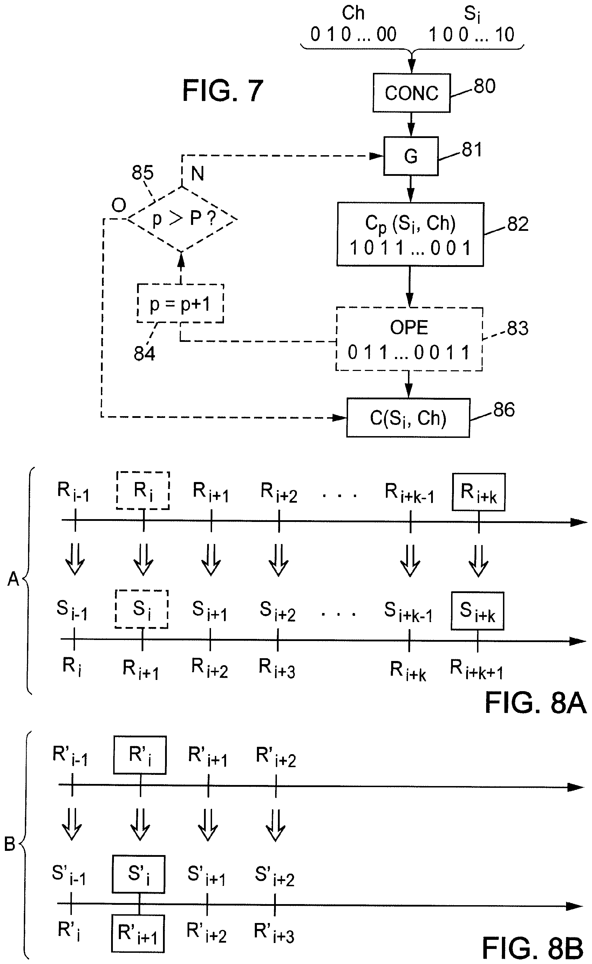

Dans une réalisation simple, le principe de base de la communication entre l'étiquette A et le lecteur B notamment pour l'authentification de l'étiquette auprès du lecteur peut rester sensiblement le même que celui décrit précédemment en référence à la figure 1 de l'art antérieur :
- le lecteur B envoie à l'étiquette A (flèche 31 de la figure 3A) au moins une donnée correspondant par exemple à un aléa (ou "*challenge*") Ch, et
- l'étiquette répond au lecteur (flèche 32 de la figure 3A) en envoyant une combinaison C(Sᵢ, Ch), telle qu'une signature et préférentiellement un chiffrement qui sera décrit plus loin en référence à la figure 7, cette combinaison impliquant au moins l'aléa Ch et un secret Sᵢ (tel qu'une clé de chiffrement) propre à l'étiquette A.
On indique ici que le lecteur B peut envoyer à l'étiquette A (flèche 31), outre l'aléa Ch, d'autres données telles qu'une indication, par exemple de date et de lieu de la communication. De même, la combinaison C(Sᵢ, Ch) que renvoie l'étiquette (flèche 32) peut impliquer d'autres données que celles de l'aléa Ch et du secret Sᵢ, par exemple un identifiant de service associé à l'étiquette ou même du porteur de l'étiquette. Ainsi, l'application de l'invention ne se limite pas à une authentification de l'étiquette, mais s'étend plus généralement à une communication entre l'étiquette et un lecteur. L'identifiant précité peut être de valeur fixe, l'essentiel étant que le secret Sᵢ propre à l'étiquette soit, au sens de l'invention, évolutif, de sorte que le résultat de la combinaison soit variable aussi, pour une même valeur d'aléa Ch et, le cas échéant, pour un même identifiant.

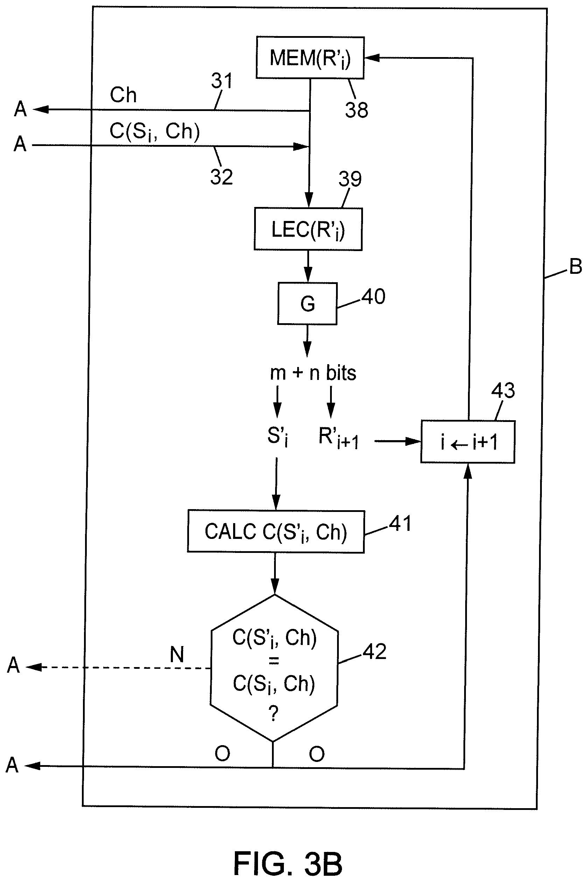

En référence en effet à la figure 8A, le secret propre à l'étiquette A peut prendre une valeur Sᵢ parmi une succession de valeurs pseudo-aléatoires Sᵢ₋₁, Sᵢ, Sᵢ₊₁, Sᵢ₊₂, ..., Sᵢ₊ₖ₋₁, Sᵢ₊ₖ. On comprendra que le terme *"succession"* fait référence ici à une notion de rang i. En particulier, le lecteur B, de son côté, doit connaître la valeur actuelle du rang i pour en déduire la valeur courante S'ᵢ (figure 8B) du secret propre à l'étiquette, avec laquelle il procède à la vérification de la combinaison C(Sᵢ, Ch) que lui envoie l'étiquette, comme on le verra plus loin en référence à la figure 3B. Par conséquent, une suite Sᵢ₋₁, Sᵢ, ..., Sᵢ₊ₖ de valeurs pseudo-aléatoires de secret doit être prédéfinie, pour l'étiquette électronique comme pour le lecteur.

Ici, le terme "*pseudo-aléatoires*" fait référence au fait qu'il n'existe *a priori* aucun lien logique (aucune fonction ou autre) entre une valeur Sᵢ et une autre valeur quelconque Sᵢ₊ₖ, ou, du moins, que ce lien, s'il existe, n'est pas facilement calculable ou n'est pas calculable en un temps raisonnable. Par exemple, une application possible de l'invention, avantageuse notamment dans le cas d'un nombre d'accès limité à un service si l'authentification de l'étiquette donne accès à un service, peut consister à stocker un nombre limité de valeurs de secret (S₀, S₁, ..., Sᵢ, ..., S_{K}) sans aucun lien entre elles (par exemple : 2, 31, 107, 98, 21, etc.) et incrémenter le rang i de la valeur de secret Sᵢ par exemple après chaque communication avec le lecteur. Cette technique, dite *"des coupons",* assure la non-traçabilité rétroactive s'il est pris le soin d'effacer (ou *"mettre à zéro*") de la mémoire de l'étiquette chaque valeur de secret Sᵢ₋₁ précédemment utilisée.

Une réalisation préférée consiste toutefois à utiliser un générateur pseudo-aléatoire de nombres. On entend ici par *"générateur pseudo-aléatoire"* un module (référence G de la figure 3A) comportant une entrée et une sortie et capable, en particulier, de délivrer un même deuxième nombre (Rᵢ₊₁, Sᵢ) en sortie, lorsqu'un même premier nombre (Rᵢ) lui a été fourni en entrée. Par ailleurs, aucun lien n'est décelable *a priori* entre le premier nombre qu'il reçoit en entrée et le deuxième nombre qu'il délivre en sortie, et ce, pour tout couple de premier et deuxième nombres précités. Tout au moins, avoir le deuxième nombre délivré en sortie ne permet de calculer en un temps raisonnable le premier nombre qui a été injecté en entrée. Une autre propriété du générateur pseudo-aléatoire est que, si les premier et deuxième nombres précités sont codés sur des bits, le générateur produit *q* bits en sortie s'il lui est fourni *p* bits en entrée, avec *q* supérieur ou égal à *p.* Il s'agit là des seules propriétés utiles du générateur G pour la mise en oeuvre de l'invention.

Ainsi, en référence à la figure 3A, l'étiquette électronique A stocke initialement (étape 34), dans une mémoire de l'étiquette ou dans une mémoire du générateur G qu'elle comporte, un nombre Rᵢ de n bits, appelé ci-après *"état interne"* du générateur G de l'étiquette. Lorsque l'étiquette est approchée du lecteur, elle est alimentée électriquement et, par exemple à la réception de l'aléa Ch du lecteur, la procédure suivante est mise en oeuvre :
- la valeur Rᵢ de l'état interne est lue dans la mémoire précitée (étape 35), et
- cette valeur lue Rᵢ est fournie en entrée du générateur pseudo-aléatoire G (étape 33), lequel délivre en sortie une série de n+m bits (010... 1001...0).
Dans l'exemple représenté sur la figure 3A, les n premiers bits de cette série (010...1) sont réservés pour former la valeur du prochain état interne Rᵢ₊₁ (incrémentation de l'indice i à l'étape 37) qui devra être stockée en mémoire (étape 34) après l'authentification auprès du lecteur, en remplacement de la valeur courante Rᵢ de l'état interne. Les m bits suivants (001...0) définissent la valeur courante de secret Sᵢ qui va être utilisée pour calculer la combinaison C(Sᵢ, Ch) (étape 36) qui est envoyée au lecteur B (flèche 32). Ainsi, lors d'une prochaine communication avec le lecteur, une valeur d'état interne Rᵢ₊₁ nouvellement stockée en mémoire sera fournie au générateur G pour délivrer une nouvelle valeur Sᵢ₊₁ de secret.

Dans cette réalisation, il est produit une nouvelle valeur Sᵢ de secret à chaque communication avec le lecteur. Ainsi, une valeur de secret ne sert qu'une fois, à l'occasion d'une communication. Toutefois, il est possible aussi de n'activer le générateur G et de ne délivrer une nouvelle valeur de secret Sᵢ qu'après un nombre limité de communications avec le lecteur. Dans ce cas, l'étiquette utilise un nombre de fois limité une même valeur courante Sᵢ de secret. Cette réalisation, qui peut être utile dans certaines applications, nécessite néanmoins un compteur de communications et il est plus simple que le générateur G soit activé dès que l'étiquette est alimentée électriquement lors d'une communication, comme décrit ci-avant.

Par ailleurs, il serait possible, dans les n+m bits délivrés en sortie du générateur G, de réserver n bits (Rᵢ₊₁) pour le prochain tirage du générateur G, mais d'utiliser r bits (avec r > m) pour former la valeur Sᵢ de secret, en prenant des bits complémentaires dans les n bits formant l'état interne Rᵢ₊₁. Il est possible aussi, dans le cas où les nombres de bits en entrée et en sortie du générateur sont égaux (m=0), d'utiliser les mêmes bits pour former à la fois l'état interne suivant Rᵢ₊₁ et la valeur courante de secret Sᵢ. Toutefois, comme l'état interne Rᵢ₊₁ est stocké ensuite en mémoire, il serait possible pour un attaquant s'emparant de l'étiquette et lisant l'état interne Rᵢ₊₁ dans la mémoire, de connaître la valeur de secret Sᵢ qui a permis la dernière authentification de l'étiquette, ce qui limite la garantie de non-traçabilité rétroactive (à une seule authentification précédente toutefois). Pour surmonter cet inconvénient, il peut être convenu d'effectuer deux tirages (un tirage de n bits pour former Rᵢ₊₁ et un tirage de n bits pour former Sᵢ) à chaque authentification.

Par ailleurs, comme à chaque valeur de l'état interne Rᵢ en entrée du générateur G correspond une valeur de secret Sᵢ en sortie du générateur, il apparaît que l'état interne Rᵢ représente finalement un *"code"* représentant le rang i de la valeur de secret Sᵢ, dans la succession précitée S₀, S₁, ..., Sᵢ, ..., S_{K}. Ainsi, l'étiquette comporte un premier générateur pseudo-aléatoire G pour déterminer une nouvelle valeur courante de secret Sᵢ₊₁, en remplacement d'une ancienne valeur Sᵢ (de rang i immédiatement inférieur au rang i+1 de la nouvelle valeur Sᵢ₊₁). Toutefois, de son côté, le lecteur B doit tenir aussi à jour la valeur du rang i pour savoir quelle est la valeur de secret qui a été utilisée par l'étiquette A pour calculer la combinaison C(Sᵢ, Ch).

A cet effet, en référence à la figure 3B, on prévoit un autre générateur pseudo-aléatoire G, opérant de façon coordonnée avec le générateur G de l'étiquette, et à disposition du lecteur B pour que ce dernier connaisse la valeur courante du secret de l'étiquette.

Les deux générateurs de la figure 3A, d'une part, et de la figure 3B, d'autre part, sont identiques dans le sens où ils délivrent les mêmes bits en sortie lorsqu'ils ont reçu les mêmes bits en entrée.

En référence maintenant à la figure 3B, le lecteur B stocke initialement en mémoire sa propre valeur d'état interne R'ᵢ (étape 38). Après envoi de l'aléa Ch (31) et réception de la réponse de l'étiquette (32) par le lecteur B, la valeur de l'état interne R'ᵢ est lue (étape 39) pour être fournie au générateur pseudo-aléatoire du lecteur (étape 40). On indique ici que le lecteur B peut comporter le générateur mis en oeuvre à l'étape 40, ou simplement le consulter à distance dans le cas où plusieurs lecteurs, par exemple en réseau, partagent un même générateur pseudo-aléatoire capable de mettre à jour une base de données accessible par les lecteurs. Cette réalisation sera évoquée plus loin en référence à la figure 5. On retiendra ici que le générateur pseudo-aléatoire intervenant à l'étape 40 peut, de façon générale, être interrogé par le lecteur B pour vérifier la combinaison reçue de l'étiquette A.

Le générateur du lecteur délivre alors une succession de bits comportant, dans l'exemple illustré sur la figure 3B et homologue de l'exemple illustré sur la figure 3A :
- n bits correspondant au prochain état interne R'ᵢ₊₁ qui sera stocké en mémoire du lecteur à l'issue de l'authentification de l'étiquette,
- et m bits correspondant à la nouvelle valeur de secret S'ᵢ avec laquelle le lecteur B recalcule la combinaison C(S'ᵢ, Ch) (étape 41).
Le test 42 qui suit cette étape consiste alors à comparer les deux combinaisons :
- C(Sᵢ, Ch) reçue de l'étiquette, et
- C(S'ᵢ, Ch) recalculée par le lecteur B avec sa valeur de secret S'ᵢ.
Si les deux combinaisons sont différentes l'une de l'autre (flèche N en sortie du test 42), le lecteur B rejette l'étiquette A. Au contraire, si les combinaisons coïncident (flèche O en sortie du test 42), le lecteur B authentifie l'étiquette A et stocke en mémoire (étape 38) la nouvelle valeur R'ᵢ₊₁ de l'état interne (incrémentation de la valeur du rang i à l'étape 43 : *"i prend la valeur de i*+1")*.*
Il convient de remarquer que le soin est pris de mettre à jour la valeur de l'état interne R'ᵢ uniquement si l'étiquette a été authentifiée. Cette mesure permet d'éviter une attaque consistant à faire incrémenter inutilement, à partir d'une étiquette pirate, l'état interne R'ᵢ du lecteur, de sorte que le lecteur ne serait plus en mesure d'authentifier ensuite une étiquette pourtant valide.

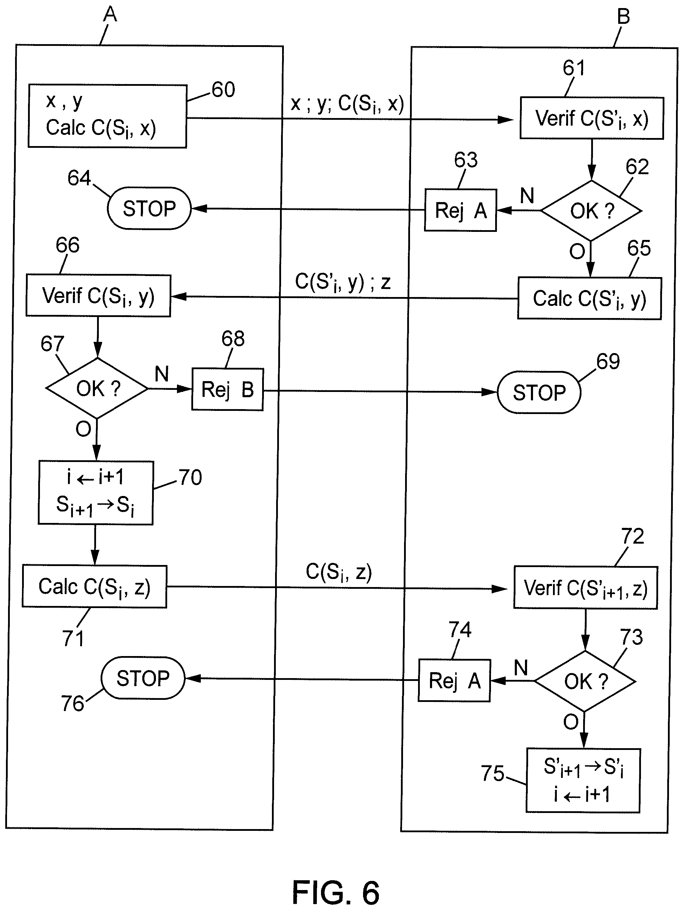

De même, sur la figure 3A, on a représenté (pour la clarté de l'exposé) une mise à jour de l'état interne Rᵢ (étape 34) après le tirage de n+m bits par le générateur pseudo-aléatoire G. Toutefois, il est préféré que la mise à jour 34 s'effectue après confirmation de l'authentification par le lecteur (comme on le verra dans la réalisation décrite plus loin en référence à la figure 6) car une attaque possible consisterait à se faire passer pour un lecteur et à envoyer simplement plusieurs aléas Ch à une étiquette pour qu'elle mette à jour plusieurs fois sa valeur de secret, de sorte que la valeur courante du secret de l'étiquette ne correspondrait plus à celle que connaît le lecteur.

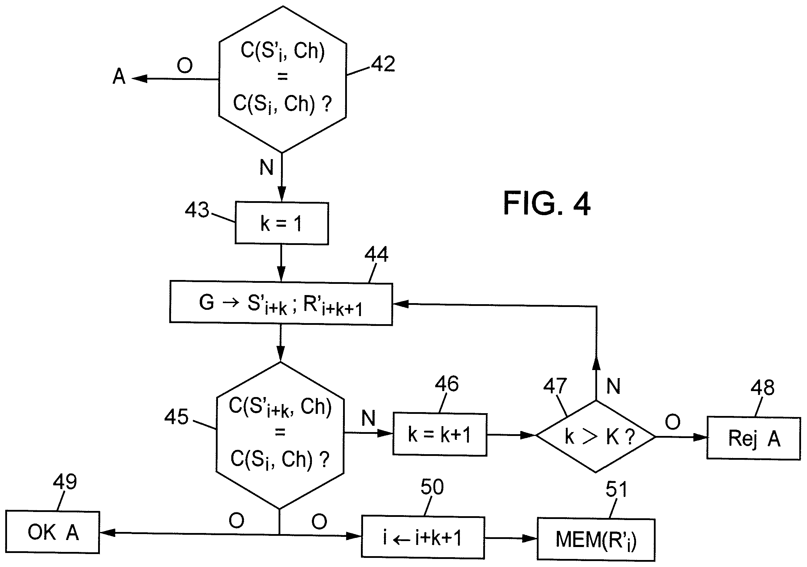

D'ailleurs, dans l'exemple de réalisation illustré sur la figure 3B, il est supposé que l'étiquette n'interagit qu'avec un unique lecteur B et, réciproquement, le lecteur n'interagit qu'avec une unique étiquette A, de sorte que leur valeur d'état interne Rᵢ et R'ᵢ coïncident (situation illustrée par des encadrés en traits pointillés sur la figure 8A et en trait plein sur la figure 8B). Il se pose toutefois le problème consistant en ce que, dans une réalisation pratique, une même étiquette électronique est normalement capable d'interagir avec plusieurs lecteurs distincts. Dans ce cas, l'état interne Rᵢ₊ₖ de l'étiquette (encadrés en trait plein de la figure 8A) peut être avancé de quelques incréments sur i par rapport à l'état interne R'ᵢ (encadrés de la figure 8B) d'un lecteur cherchant à authentifier l'étiquette et le lecteur de la figure 3B ne serait pas en mesure d'authentifier l'étiquette. Cet inconvénient est surmonté par la réalisation représentée sur la figure 4.

Dans la réalisation de la figure 4, en partant du test 42 de la figure 3B, on ne rejette pas immédiatement l'étiquette si le test de coïncidence des combinaisons reçue et recalculée par le lecteur est négatif (flèche N en sortie du test 42). On s'autorise en effet un nombre fini K (test 47) de mises à jour de l'état interne R'ᵢ et de la valeur de secret S'ᵢ (étape 44). On vérifie à chaque mise à jour (boucle sur l'indice k incrémenté (étape 46) jusqu'à atteindre, au plus, le nombre fini K) la coïncidence entre la combinaison C(Sᵢ, Ch) reçue et la combinaison recalculée avec la valeur de secret mise à jour S'ᵢ₊ₖ (étape 45). Si l'une des mises à jour mène effectivement à une coïncidence entre les combinaisons (flèches O en sortie du test 45), le lecteur valide l'authentification de l'étiquette (étape 49) et stocke en mémoire la valeur en cours R'ᵢ₊ₖ₊₁ de l'état interne (étape 51, l'indice i prenant la valeur de i+k+1 à l'étape 50), pour une prochaine authentification de la carte. Cette valeur en cours de l'état interne est donc celle issue du tirage du générateur qui a donné la valeur de secret satisfaisante S'ᵢ₊ₖ pour l'authentification au test 45. En revanche, si la valeur du nombre fini K a été atteinte par l'indice de boucle k sans qu'il n'ait été trouvé de valeur de secret S'ᵢ₊ₖ satisfaisant le test 45 (flèche O en sortie du test 47), l'étiquette est définitivement rejetée (étape 48).

Il convient d'indiquer ici que les instructions *"i prend la valeur de i+1"* (étapes 37 et 43) ou "*i prend la valeur de i*+*k*+1*"* (étape 50) ne sont illustrées sur les figures qu'à des fins explicatives. Elles ne sont pas prévues en pratique. En effet, de manière générale, il suffit de stocker en mémoire la dernière valeur d'état interne donnée par le générateur Rᵢ ou R'ᵢ et d'injecter ensuite cette valeur en entrée du générateur pour obtenir une nouvelle valeur de secret Sᵢ ou S'ᵢ.

Par ailleurs, un même lecteur B peut servir à authentifier une pluralité d'étiquettes A, A', A". Par exemple, il est possible de :
- attribuer une valeur initiale d'état interne R₀ différente pour chaque étiquette,
- fournir ces valeurs R₀^{A}, R₀^{A'}, R₀^{A}" au lecteur, et
- équiper les étiquettes et le lecteur d'un même générateur pseudo-aléatoire G, de sorte que le lecteur, mettant à jour par exemple une base de données des états internes en cours Rᵢ^{A}, Rᵢ^{A'} Rᵢ^{A"} des étiquettes, peut contrôler l'authenticité de chaque étiquette en testant toutes les valeurs de secret courantes S'ᵢ^{A}, S'ᵢ^{A'}, S'ᵢ^{A"}.
Toutefois, il apparaît, dans le cas où plusieurs étiquettes A, A', A" peuvent communiquer avec plusieurs lecteurs B, B', B", que les vérifications à mener avec plusieurs étiquettes et, pour chaque étiquette, avec K valeurs de secret possibles (réalisation de la figure 4), les opérations de vérification que doivent effectuer les lecteurs sont lourdes et nombreuses et peuvent retarder l'interaction avec une étiquette.

Pour surmonter cet inconvénient, en référence à la figure 5, il est proposé de relier les lecteurs B, B', B" à une base de données commune BD qui collecte et stocke les mises à jour faites par chaque lecteur et, ainsi, chaque lecteur peur consulter cette base de données BD pour en déduire et tester simplement la dernière valeur courante de secret Sᵢ de chaque étiquette A, A', A" pour une authentification, et non pas des valeurs de secret ultérieures Sᵢ₊ₖ comme décrit précédemment en référence à la figure 4. Dans cette réalisation, à chaque authentification d'une étiquette faite par un lecteur, une incrémentation de l'état interne et de la valeur de secret de cette étiquette est menée par le générateur G de ce lecteur, et la nouvelle valeur de l'état interne Rᵢ₊₁ et/ou du secret Sᵢ sont stockées dans la base de données BD pour une authentification ultérieure par le même lecteur ou un lecteur différent qui a accès à la base BD. Il convient de rappeler ici qu'une même étiquette n'est pas censée communiquer avec deux lecteurs distincts ou plus, en même temps.

Il est possible, dans certaines applications (petit nombre de lecteurs en réseau local par exemple pour un accès sécurisé à un bâtiment) de ne prévoir qu'un unique générateur G, en réseau, que peuvent consulter les lecteurs B, B', B", ce générateur étant relié en outre à la base de données BD, puisque tous les générateurs des lecteurs B, B', B" de la figure 5 sont identiques. Toutefois, si plusieurs étiquettes communiquent avec plusieurs lecteurs respectifs, en même temps, les temps de traitement de ce générateur unique et ses consultations/archivages de la base de données peuvent considérablement perturber les communications entre lecteurs et étiquettes. Ainsi, il peut donc être avantageux que chaque lecteur incorpore son propre générateur G. Il peut même être avantageux que chaque lecteur stocke une même base de données BD en mémoire, les bases de données étant identiques d'un lecteur à l'autre, et mises à jour par communication d'un lecteur vers tous les autres lecteurs à travers le réseau qui les relie, par exemple pendant des périodes d'inactivité pour ne pas perturber les interactions avec les étiquettes.

Cette réalisation est avantageuse. Toutefois, une attaque possible consisterait à se faire passer pour un lecteur auprès d'une étiquette pour incrémenter inutilement son état interne, de sorte que l'état interne de l'étiquette Rᵢ₊₁ ne corresponde plus à celui Rᵢ stocké dans la base BD. On peut prévoir à nouveau une procédure visant à autoriser le lecteur à mener un nombre fini K de tests de valeurs de secret ultérieures Sᵢ, ..., S_{i+K} comme décrit précédemment en référence à la figure 4, mais alors il se présente à nouveau l'inconvénient de lourds traitements à effectuer par les lecteurs.

La réalisation illustrée sur la figure 6 vient surmonter cet inconvénient. Elle a la particularité de laisser à l'étiquette A l'initiative d'envoyer l'aléa Ch au lecteur. Plus exactement, en référence à la figure 6 :
- l'étiquette A envoie (étape 60) au lecteur B une première donnée (aléa x) et une deuxième donnée (aléa y) de l'étiquette, ainsi qu'une première combinaison C(Sᵢ, x) calculée à l'aide de la première donnée (x) et d'une valeur courante Sᵢ de secret de l'étiquette A,
- le lecteur B recalcule la première combinaison (étape 61) à l'aide de la première donnée x reçue de l'étiquette et d'une valeur courante de secret S'ᵢ du lecteur.

Si le lecteur ne parvient pas à établir la correspondance entre la première combinaison C(Sᵢ, x) reçue de l'étiquette et celle qu'il recalcule C(S'ᵢ, x) (flèche N en sortie du test 62), alors l'étiquette n'est pas valide (étape 63) et la communication s'arrête (étape 64). En revanche, en cas d'identité avec la première combinaison reçue de l'étiquette (flèche O en sortie du test 62), le lecteur envoie à l'étiquette :
- une deuxième combinaison C(Sᵢ, y) calculée (étape 65) à l'aide de la deuxième donnée (y) reçue de l'étiquette et de la valeur courante S'ᵢ de secret du lecteur,
- ainsi qu'une troisième donnée (aléa z) du lecteur.
Ensuite, l'étiquette A recalcule (étape 66) la deuxième combinaison à l'aide de la deuxième donnée (y) de l'étiquette et de la valeur courante de secret Sᵢ de l'étiquette. Si l'étiquette ne parvient pas à établir la correspondance entre la deuxième combinaison C(Sᵢ, y) reçue du lecteur et celle qu'elle recalcule C(S'ᵢ, y) (flèche N en sortie du test 67), alors le lecteur est un attaquant (étape 68) et la communication s'arrête (étape 69). En revanche, en cas d'identité avec la deuxième combinaison reçue du lecteur (flèche O en sortie du test 67), l'étiquette :
- remplace sa valeur courante de secret Sᵢ par une nouvelle valeur Sᵢ₊₁, par exemple en incrémentant son état interne Rᵢ (étape 70), et
- envoie au lecteur une troisième combinaison C(Sᵢ₊₁, z) (mais notée C(Sᵢ, z) sur la figure 6, en raison de l'incrémentation i = i+1), calculée à l'aide de la troisième donnée (aléa z) reçue du lecteur et de la nouvelle valeur courante Sᵢ₊₁ de secret de l'étiquette (étape 71).
De son côté, le lecteur B :
- détermine une nouvelle valeur de secret S'ᵢ₊₁ (mais ne mémorise pas encore son nouvel état interne R'ᵢ₊₂),
- recalcule (étape 72) la troisième combinaison à l'aide de la troisième donnée (aléa z) du lecteur et de la nouvelle valeur déterminée de secret S'ᵢ₊₁ du lecteur. Si le lecteur ne parvient pas à établir la correspondance entre la troisième combinaison C(Sᵢ₊₁, z) reçue de l'étiquette et celle qu'il recalcule C(S'ᵢ₊₁, z) (flèche N en sortie du test 73), alors l'étiquette n'est pas valide (étape 74) et la communication s'arrête (étape 76). Un pirate de l'étiquette aura simplement eu ponctuellement une bonne valeur de secret Sᵢ. En revanche, en cas d'identité avec la troisième combinaison reçue de
l'étiquette (flèche O en sortie du test 73), le lecteur remplace définitivement sa valeur courante de secret S'ᵢ par la nouvelle valeur de secret S'ᵢ₊₁ (étape 75), par exemple en stockant en mémoire l'état interne R'ᵢ₊₂ qui avait été tiré avec la nouvelle valeur de secret S'ᵢ₊₁.

Avantageusement, comme l'étiquette comporte déjà un générateur pseudo-aléatoire G, pour limiter les moyens à embarquer dans l'étiquette (et donc limiter son coût de fabrication), il est avantageux que le premier aléa x et le deuxième aléa y que donne l'étiquette soient simplement obtenus par tirage du générateur pseudo-aléatoire G de l'étiquette. Pour ce faire, on peut prévoir en entrée du générateur une donnée évolutive quelconque (un horodatage par exemple ou même l'état interne courant Rᵢ en réinjectant plusieurs fois en entrée du générateur le résultat du tirage et sans mémoriser, bien entendu, le résultat obtenu comme étant un nouvel état interne Rᵢ₊ₖ) pour récupérer deux aléas x et y dont la taille globale peut être de n+m bits. De même, le générateur du lecteur peut fournir le troisième aléa z.

Plus généralement, pour limiter encore les coûts de fabrication, un même générateur pseudo-aléatoire G peut servir à plusieurs fonctions, notamment aussi et de façon avantageuse, au calcul de combinaison d'un aléa avec une valeur de secret. Comme indiqué précédemment, la combinaison peut consister en un chiffrement à flot de la donnée du lecteur Ch, avec la valeur courante de secret Sᵢ, cette dernière intervenant alors en tant que clé de chiffrement. On tire ainsi avantage des performances offertes par les conceptions les plus légères et les plus efficaces dans le domaine des chiffrements à flots. On en a représenté un exemple sur la figure 7, dans lequel un aléa Ch (succession de bits 010 ...00) et une clé de chiffrement Sᵢ (succession de bits 100 ... 10) sont combinés (étape 80) l'un à l'autre, par exemple par simple concaténation, ou encore en mélangeant de façon prédéterminée (connue de l'étiquette et du lecteur) leurs bits. Puis, la composition de bits ainsi obtenue est injectée en entrée du générateur (étape 81) pour délivrer une première combinaison Cₚ(Sᵢ, Ch) (étape 82 où la suite de bits 1011 ... 001 est, par exemple, obtenue). On peut décider que cette combinaison Cₚ(Sᵢ, Ch) constitue simplement le chiffrement de l'aléa Ch par la clé Sᵢ (étape 86) ou continuer encore le chiffrement à flots (étapes 83, 84, 85, en traits pointillés sur la figure 7), par exemple en opérant sur les bits que délivre le générateur, de façon prédéterminée (connue de l'étiquette et du lecteur). Par exemple, à l'étape 83, on peut prévoir un décalage de bits (rang j+1 = j, donc 1011 ... 001 devient 011 ...0011) puis réinjecter le décalage obtenu dans le générateur G pour obtenir un nouveau tirage. On peut réitérer P fois ce traitement (étape 84 et 85) pour obtenir finalement (étape 86) une suite de bits correspondant au chiffrement C(Sᵢ, Ch) de l'aléa Ch par le secret Sᵢ. On peut, par exemple, convenir qu'un aléa Ch soit de n-m bits (le secret Sᵢ s'étendant sur m bits), pour que le mode opératoire du générateur soit inchangé (n bits en entrée et n+m bits en sortie). En complément ou en variante, il peut être prévu aussi que le traitement réalisé à l'étape 80 règle le nombre de bits adéquats (n dans l'exemple décrit) à injecter en entrée du générateur. Typiquement, si une concaténation est effectivement mise en oeuvre à l'étape 80, il est possible par de ne retenir, parmi les n+m bits résultants, que n bits en supprimant m bits qui occupent des positions connues de l'étiquette comme du lecteur, et répéter cette étape de suppression de bits avant chaque injection dans le générateur.

Par ailleurs, l'opération de concaténation pour effectuer le chiffrement n'est décrite ici qu'à titre d'exemple et admet de nombreuses variantes. Par exemple, il peut être prévu de n'injecter que le secret Sᵢ dans le générateur et de combiner le résultat obtenu avec l'aléa Ch. Une réalisation possible peut alors être la suivante. Si le nombre m de bits du secret Sᵢ est supérieur au nombre n de bits en entrée du générateur, il peut par exemple être prévu :
- de supprimer les m-n bits de gauche du secret si le premier bit de l'aléa vaut 0 et ceux de droite sinon,
- injecter les n bits restants dans le générateur pseudo-aléatoire, pour récupérer n+m bits,
- supprimer de ces n+m bits, les m bits de gauche du secret si le deuxième bit de l'aléa vaut 0 et ceux de droite sinon,
- injecter les n bits restants dans le générateur pseudo-aléatoire, pour récupérer n+m bits,
- supprimer de ces n+m bits, les m bits de gauche du secret si le troisième bit de l'aléa vaut 0 et ceux de droite sinon, et injecter le résultat dans le générateur,
- et ainsi de suite jusqu'à épuisement des bits de l'aléa.

Bien entendu, tous ces traitements sont connus aussi du lecteur pour qu'il puisse vérifier le chiffrement que lui envoie l'étiquette (et réciproquement pour le mode de réalisation de la figure 6).

On comprendra ainsi que le chiffrement à flots fait intervenir au moins le générateur pseudo-aléatoire de l'étiquette (et bien entendu celui du lecteur dans le mode de réalisation de la figure 6), de façon avantageuse sans qu'aucun autre moyen de chiffrement ne soit nécessaire.

Ainsi, l'invention procure notamment les avantages ci-après.
L'identité d'une étiquette A n'est connue que d'un lecteur B (ou B', B") et n'est jamais révélée au cours de l'authentification.
Aucun lecteur autre que les lecteurs reliés à (ou comportant) la base de données des secrets précitée ne peut reconnaître l'étiquette A. Autrement dit, hormis pour ces lecteurs B, B', B" (figure 5), deux étiquettes A et A' sont indiscernables par un tiers. Ainsi, une étiquette A ne peut pas être reconnue par observation de son comportement. Même en possession d'un lecteur B permettant à l'étiquette A de s'authentifier, un tiers ne peut identifier les authentifications passées entre l'étiquette A et un quelconque lecteur B, B' ou B".
Il est possible d'utiliser un générateur pseudo-aléatoire très simple, ce qui permet de diminuer le nombre de portes nécessaires à la mise en oeuvre de l'invention en tirant parti des nombreux générateurs pseudo-aléatoires existants et nécessitant très peu de portes.

La présente invention vise aussi une étiquette électronique comportant, outre des moyens de communication avec un lecteur, des moyens pour la mise en oeuvre de l'invention décrite ci-avant (tel par exemple qu'un générateur pseudo-aléatoire G). Elle vise aussi un programme informatique destiné à être stocké en mémoire d'une telle étiquette électronique et comportant des instructions pour calculer la combinaison entre une donnée reçue du lecteur (aléa Ch) et un secret propre à l'étiquette, en utilisant un nombre de fois limité une même valeur courante de secret Sᵢ, obtenue parmi une succession de valeurs pseudo-aléatoires de secret propres à l'étiquette. Par exemple, la figure 3A, la figure 6 (partie de gauche) et la figure 7 peuvent correspondre à des organigrammes représentant un algorithme ou des variantes d'algorithme de ce programme informatique.

La présente invention vise aussi un lecteur destiné à communiquer avec au moins une étiquette électronique notamment pour authentification de l'étiquette, le lecteur comportant, outre des moyens de communication avec l'étiquette électronique, des moyens pour la mise en oeuvre de l'invention décrite ci-avant. Elle vise aussi un programme informatique destiné à être stocké en mémoire d'un tel lecteur et comportant des instructions pour calculer une combinaison au moins entre une donnée connue du lecteur (aléa Ch) et un secret propre à l'étiquette, en utilisant un nombre de fois limité une même valeur courante de secret S'ᵢ, obtenue parmi une succession de valeurs pseudo-aléatoires de secret propres à l'étiquette. Par exemple, la figure 3B, la figure 4, la figure 6 (partie de droite) et la figure 7 peuvent correspondre à des organigrammes représentant un algorithme ou des variantes d'algorithme de ce programme informatique.

Enfin, la présente invention vise aussi un système comportant au moins une étiquette du type précité et au moins un lecteur du type précité, pour la mise en oeuvre du procédé au sens de l'invention. Par exemple, la figure 5 décrite ci-avant peut illustrer un tel système.

## Revendications

1. Procédé de communication entre une étiquette électronique (A) et un lecteur (B), pour une authentification de l'étiquette auprès du lecteur, dans lequel :
a) le lecteur envoie au moins une donnée (Ch) à l'étiquette,
b) l'étiquette calcule une combinaison au moins entre la donnée du lecteur (Ch) et un secret (K_{A}) propre à l'étiquette, et communique le résultat (C(K_{A}, Ch)) de la combinaison au lecteur (B) pour vérification de l'authenticité de l'étiquette auprès du lecteur,
ladite combinaison (C(Sᵢ, Ch)) étant calculée en utilisant une valeur courante de secret (Sᵢ) obtenue parmi une succession de valeurs pseudo-aléatoires de secret propres à l'étiquette (A) et déterminables par le lecteur (B), une nouvelle valeur courante de secret étant déterminée une seule fois à chaque communication entre l'étiquette et le lecteur,
un premier générateur pseudo-aléatoire, dans l'étiquette, détermine une nouvelle valeur courante de secret (Sᵢ₊₁), en remplacement d'une ancienne valeur (Sᵢ) précédant immédiatement la nouvelle valeur (Sᵢ₊₁) dans ladite succession, et un deuxième générateur pseudo-aléatoire opère de façon coordonnée avec le premier générateur et est interrogé par le lecteur pour connaître une valeur courante (Sᵢ₊₁) du secret de l'étiquette,
**caractérisé en ce que** le premier et le deuxième générateur pseudo-aléatoire reçoivent en entrée un premier nombre (Rᵢ) pour délivrer en sortie un deuxième nombre (Rᵢ₊₁, Sᵢ), et **en ce que** le premier et le deuxième générateur pseudo-aléatoire délivrent, en opération, à partir d'un premier nombre (Rᵢ) en entrée :
- un deuxième nombre comportant une première valeur (m bits) de secret (Sᵢ) pour calculer ladite combinaison (C(Sᵢ, Ch)), et
- un troisième nombre (n bits) destiné à être stocké en mémoire de l'étiquette (Rᵢ₊₁) et respectivement du lecteur (R'ᵢ₊₁) pour être fourni, en tant que premier nombre, en entrée du premier et respectivement du deuxième générateur, pour une opération suivante, en vue d'obtenir une deuxième valeur de secret (Sᵢ₊₁, S'ᵢ₊₁) qui suit immédiatement la première valeur de secret (Sᵢ, S'ᵢ) dans ladite succession.

2. Procédé selon la revendication 1, dans lequel l'étiquette est agencée pour communiquer avec une pluralité de lecteurs (B, B', B") reliés à une base de données (BD), **caractérisé en ce que** le deuxième générateur est agencé pour communiquer à ladite base de données une nouvelle valeur courante de secret (Sᵢ) propre à ladite étiquette (A) et/ou un indicatif de rang (Rᵢ₊₁) de la valeur courante de secret (Sᵢ) dans la succession, pour un stockage de mise à jour dans la base de données (BD), et **en ce que** chaque lecteur est agencé pour consulter ladite base de données pour en déduire la valeur courante de secret propre à ladite étiquette (A).

3. Procédé selon l'une des revendications précédentes, **caractérisé en ce que** la ladite combinaison comporte un chiffrement à flot (86) de la donnée du lecteur (Ch), avec la valeur courante de secret (Sᵢ) en tant que clé de chiffrement.

4. Procédé selon la revendication 3, **caractérisé en ce que** le premier générateur est utilisé (81) pour effectuer ledit chiffrement.

5. Procédé selon la revendication 4, **caractérisé en ce que** le chiffrement comporte au moins une application (81) au premier générateur d'une composition (80, 83) formée par la donnée du lecteur (Ch) et la valeur courante de secret (Sᵢ).

6. Procédé selon l'une des revendications précédentes, **caractérisé en ce que** :
- l'étiquette (A) envoie au lecteur (B) une première (x) et une deuxième (y) donnée de l'étiquette, ainsi qu'une première combinaison (C(Sᵢ, x)) calculée à l'aide de la première donnée (x) et d'une valeur courante (Sᵢ) de secret de l'étiquette,
- le lecteur (B) recalcule la première combinaison à l'aide de la première donnée (x) reçue de l'étiquette et d'une valeur courante de secret (S'ᵢ) du lecteur, et, en cas d'identité avec la première combinaison reçue de l'étiquette, envoie à l'étiquette, à l'étape a) :
• une deuxième combinaison (C(S'_{i,} y)) calculée à l'aide de la deuxième donnée (y) reçue de l'étiquette et de la valeur courante (S'ᵢ) de secret du lecteur,
• ainsi qu'une troisième donnée (z) du lecteur,
- l'étiquette (A) recalcule, à l'étape b), la deuxième combinaison à l'aide de la deuxième donnée (y) de l'étiquette et de la valeur courante de secret (Sᵢ) de l'étiquette, et, en cas d'identité avec la deuxième combinaison reçue du lecteur :
• remplace sa valeur courante de secret (Sᵢ) par une nouvelle valeur pseudo-aléatoire (Sᵢ₊₁) qui suit immédiatement la valeur courante (Sᵢ) dans ladite succession, et
• envoie au lecteur une troisième combinaison (C(Sᵢ₊₁, z)) calculée à l'aide de la troisième donnée (z) reçue du lecteur et de la nouvelle valeur courante (Sᵢ₊₁) de secret de l'étiquette,
- le lecteur (B) :
• détermine une nouvelle valeur de secret (S'ᵢ₊₁) correspondant à une valeur pseudo-aléatoire qui suit immédiatement la valeur courante (S'ᵢ) de secret du lecteur dans ladite succession,
• recalcule la troisième combinaison à l'aide de la troisième donnée (z) du lecteur et de la nouvelle valeur déterminée de secret (S'ᵢ₊₁) du lecteur, et, en cas d'identité avec la troisième combinaison reçue de l'étiquette, remplace la valeur courante de secret (S'ᵢ) du lecteur par la nouvelle valeur de secret déterminée (S'ᵢ₊₁).

7. Procédé selon la revendication 6, **caractérisé en ce que** les première (x) et deuxième (y) données, au moins (z), sont des aléas, et **en ce que** les première (x) et deuxième (y) données sont obtenues à l'aide du premier générateur pseudo-aléatoire.

8. Etiquette électronique, **caractérisée en ce qu'**elle comporte un premier générateur pseudo-aléatoire adapté pour déterminer une nouvelle valeur courante de secret (Sᵢ₊₁), en remplacement d'une ancienne valeur (Sᵢ), pour la mise en oeuvre du procédé selon l'une des revendications 1 à 7.

9. Système **caractérisé en ce qu'**il comporte une étiquette selon la revendication 8, pour la mise en oeuvre du procédé selon l'une des revendications 1 à 7.

10. Programme informatique comprenant des instructions pour la mise en oeuvre du procédé selon l'une quelconque des revendications 1 à 7, lorsque lesdites instructions sont exécutées par un processeur.

## Patentansprüche

1. Verfahren zur Kommunikation zwischen einem elektronischen Etikett (A) und einem Lesegerät (B) für eine Authentifizierung des Etiketts bei dem Lesegerät, wobei:
a) das Lesegerät mindestens ein Datenelement (Ch) an das Lesegerät sendet,
b) das Lesegerät eine Kombination zumindest zwischen dem Datenelement des Lesegeräts (Ch) und einem Geheimnis (K_{A}), das dem Etikett eigen ist, berechnet, und das Ergebnis (C(K_{A}, Ch)) der Kombination zur Überprüfung der Authentizität des Etiketts bei dem Lesegerät an das Lesegerät (B) kommuniziert, **dadurch gekennzeichnet, dass**:
die Kombination (C(Sᵢ, Ch)) mithilfe eines laufenden Werts eines Geheimnisses (Sᵢ) berechnet wird, der aus einer Abfolge von pseudozufälligen Werten eines Geheimnisses erhalten wird, die dem Etikett (A) eigen sind und von dem Lesegerät (B) ermittelbar sind, wobei ein neuer laufender Wert eines Geheimnisses nur einmal bei jeder Kommunikation zwischen dem Etikett und dem Lesegerät ermittelt wird,
ein erster Pseudozufallsgenerator in dem Etikett einen neuen laufenden Wert eines Geheimnisses (Sᵢ₊₁) als Ersatz für einen alten Wert (Sᵢ) ermittelt, der dem neuen Wert (Sᵢ₊₁) in der Abfolge unmittelbar vorausgeht, und ein zweiter Pseudozufallsgenerator in einer koordinierten Weise mit dem ersten Generator zusammenwirkt und von dem Lesegerät abgefragt wird, um einen laufenden Wert (Sᵢ₊₁) des Geheimnisses des Etiketts zu erfahren,
der erste und der zweite Pseudozufallsgenerator am Eingang eine erste Zahl (Rᵢ) empfangen, um am Ausgang eine zweite Zahl (Rᵢ₊₁, Sᵢ) auszugeben, und dadurch, dass der erste und der zweite Pseudozufallsgenerator im Betrieb auf Grundlage einer ersten Zahl (Rᵢ) am Eingang Folgendes ausgeben:
- eine zweite Zahl, die einen ersten Wert (m Bits) eines Geheimnisses (Sᵢ) aufweist, um die Kombination (C(Sᵢ, Ch)) zu berechnen, und
- eine dritte Zahl (n Bits), die dazu bestimmt ist, in einem Speicher des Etiketts (Rᵢ₊₁) bzw. des Lesegeräts (R'ᵢ₊₁) gespeichert zu sein, um als erste Zahl am Eingang des ersten bzw. des zweiten Generators für eine nachfolgende Operation bereitgestellt zu werden, mit dem Ziel, einen zweiten Wert eines Geheimnisses (Sᵢ₊₁, S'ᵢ₊₁) zu erhalten, der unmittelbar auf den ersten Wert eines Geheimnisses (Sᵢ, S'ᵢ) in der Abfolge folgt.

2. Verfahren nach Anspruch 1, wobei das Etikett eingerichtet ist, mit einer Mehrzahl von Lesegeräten (B, B', B") zu kommunizieren, die mit eine Datenbank (BD) verbunden sind, **dadurch gekennzeichnet, dass** der zweite Generator eingerichtet ist, einen neuen laufenden Wert eines Geheimnisses (Sᵢ), der dem Etikett (A) eigen ist, und/oder eine Kennung eines Rangs (Rᵢ₊₁) des laufenden Werts eines Geheimnisses (Sᵢ) in der Abfolge für eine Speicherung einer Aktualisierung in der Datenbank (BD) an die Datenbank zu kommunizieren, und dadurch, dass jedes Lesegerät eingerichtet ist, die Datenbank abzufragen, um daraus den laufenden Wert eines Geheimnisses abzuleiten, der dem Etikett (A) eigen ist.

3. Verfahren nach einem der vorhergehenden Ansprüche, **dadurch gekennzeichnet, dass** die Kombination eine Flusschiffre (86) des Datenelements des Lesegeräts (Ch) mit dem laufenden Wert eines Geheimnisses (Sᵢ) als Verschlüsselungsschlüssel aufweist.

4. Verfahren nach Anspruch 3, **dadurch gekennzeichnet, dass** der erste Generator genutzt wird (81), um die Verschlüsselung durchzuführen.

5. Verfahren nach Anspruch 4, **dadurch gekennzeichnet, dass** die Verschlüsselung mindestens eine Anwendung (81), auf den ersten Generator, einer Zusammensetzung (80, 83), die von dem Datenelement des Lesegeräts (Ch) und dem laufenden Wert eines Geheimnisses (Sᵢ) gebildet ist, aufweist.

6. Verfahren nach einem der vorhergehenden Ansprüche, **dadurch gekennzeichnet, dass**:
- das Etikett (A) an das Lesegerät (B) ein erstes (x) und ein zweites (y) Datenelement des Etiketts sowie eine erste Kombination (C(Sᵢ, x)), die mithilfe des ersten Datenelements (x) und eines laufenden Werts (Sᵢ) eines Geheimnisses des Etiketts berechnet wird, sendet,
- das Lesegerät (B) die erste Kombination mithilfe des ersten Datenelements (x), das von dem Etikett empfangen wird, und eines laufenden Werts eines Geheimnisses (S'ᵢ) des Lesegeräts erneut berechnet, und im Falle einer Übereinstimmung mit der ersten Kombination, die von dem Etikett empfangen wird, im Schritt a) Folgendes an das Etikett sendet:
• eine zweite Kombination (C(S'_{i,} y)), die mithilfe des zweiten Datenelements (y), das von dem Etikett empfangen wird, und des laufenden Werts (S'ᵢ) eines Geheimnisses des Lesegeräts berechnet wird,
• sowie ein drittes Datenelement (z) des Lesegeräts,
- das Etikett (A) im Schritt b) die zweite Kombination mithilfe des zweiten Datenelements (y) des Etiketts und des laufenden Werts eines Geheimnisses (Sᵢ) des Etiketts erneut berechnet, und im Falle einer Übereinstimmung mit der zweiten Kombination, die von dem Lesegerät erhalten wird:
• seinen laufenden Wert eines Geheimnisses (Sᵢ) durch einen neuen pseudozufälligen Wert (Sᵢ₊₁) ersetzt, der unmittelbar auf den laufenden Wert (Sᵢ) in der Abfolge folgt, und
• an das Lesegerät eine dritte Kombination (C(Sᵢ₊₁, z)) sendet, die mithilfe des dritten Datenelements (z), das von dem Etikett empfangen wird, und des laufenden Werts (Sᵢ₊₁) eines Geheimnisses des Etiketts berechnet wird,
- das Lesegerät (B):
• einen neuen Wert eines Geheimnisses (S'ᵢ₊₁) ermittelt, der einem pseudozufälligen Wert entspricht, der unmittelbar auf den laufenden Wert (S'ᵢ) eines Geheimnisses des Lesegeräts in der Abfolge folgt,
• die dritte Kombination mithilfe des dritten Datenelements (z) des Lesegeräts und des neuen ermittelten Werts eines Geheimnisses (S'ᵢ₊₁) des Lesegeräts erneut berechnet, und im Falle einer Übereinstimmung mit der dritten Kombination, die von dem Etikett erhalten wird, den laufenden Wert eines Geheimnisses (S'ᵢ) des Lesegeräts durch den neuen ermittelten Wert eines Geheimnisses (S'ᵢ₊₁) ersetzt.

7. Verfahren nach Anspruch 6, **dadurch gekennzeichnet, dass** das erste (x) und das zweite (y) Datenelement, zumindest (z), Unwägbarkeiten sind, und dadurch, dass das erste (x) und das zweite (y) Datenelement mithilfe des ersten Pseudozufallsgenerators erhalten werden.

8. Elektronisches Etikett, **dadurch gekennzeichnet, dass** es einen ersten Pseudozufallsgenerator aufweist, der angepasst ist, einen neuen laufenden Wert eines Geheimnisses (Sᵢ₊₁) als Ersatz für einen alten Wert (Sᵢ) für die Durchführung des Verfahrens nach einem der Ansprüche 1 bis 7 zu ermitteln.

9. System, **dadurch gekennzeichnet, dass** es ein Etikett nach Anspruch 8 für die Durchführung des Verfahrens nach einem der Ansprüche 1 bis 7 aufweist.

10. Computerprogramm, umfassend Anweisungen für die Umsetzung des Verfahrens nach einem der Ansprüche 1 bis 7, wenn die Anweisungen von einem Prozessor ausgeführt werden.

## Claims

1. Method for communication between an electronic tag (A) and a reader (B), for authenticating the tag with the reader, wherein:
a) the reader sends at least one item of data (Ch) to the tag,
b) the tag calculates a combination at least between the item of data (Ch) from the reader and a secret (K_{A}) specific to the tag, and communicates the result (C(K_{A}, Ch)) of the combination to the reader (B) in order to verify the authenticity of the tag with the reader, **characterized in that**:
said combination (C(Sᵢ, Ch)) is calculated using a current secret value (Sᵢ) obtained from a sequence of pseudorandom secret values specific to the tag (A) and
able to be determined by the reader (B), a new current secret value being determined only once upon each communication between the tag and the reader,
a first pseudorandom generator, in the tag, determines a new current secret value (Sᵢ₊₁), as a substitute for an old value (Sᵢ) immediately preceding the new value (Sᵢ₊₁) in said sequence, and a second pseudorandom generator operates in a manner coordinated with the first generator and is interrogated by the reader in order to ascertain a current value (Sᵢ₊₁) of the secret of the tag,
the first and the second pseudorandom generator receive a first number (Rᵢ) at input so as to deliver a second number (Rᵢ₊₁, Sᵢ) at output, and **in that** the first and the second pseudorandom generator deliver, during operation, from a first number (Rᵢ) at input:
- a second number having a first secret value (Sᵢ) (m bits) for calculating said combination (C(Sᵢ, Ch)), and
- a third number (n bits) intended to be stored in the memory of the tag (Rᵢ₊₁) and of the reader (R'ᵢ₊₁), respectively, so as to be supplied, as first number, at input of the first and of the second generator, respectively, for a following operation, for the purpose of obtaining a second secret value (Sᵢ₊₁, S'ᵢ₊₁) that immediately follows the first secret value (Sᵢ, S'ᵢ) in said sequence.

2. Method according to Claim 1, wherein the tag is designed to communicate with a plurality of readers (B, B', B") linked to a database (BD), **characterized in that** the second generator is designed to communicate, to said database, a new current secret value (Sᵢ) specific to said tag (A) and/or an indicator of rank (Rᵢ₊₁) of the current secret value (Sᵢ) in the sequence, in order to store an update in the database (BD), and **in that** each reader is designed to consult said database in order to find out the current secret value specific to said tag (A) therefrom.

3. Method according to either of the preceding claims, **characterized in that** said combination includes stream ciphering (86) of the item of data (Ch) from the reader, with the current secret value (Sᵢ) as encryption key.

4. Method according to Claim 3, **characterized in that** the first generator is used (81) to perform said encryption.

5. Method according to Claim 4, **characterized in that** the encryption includes at least one application (81), to the first generator, of a composition (80, 83) formed by the item of data (Ch) from the reader and the current secret value (Sᵢ).

6. Method according to one of the preceding claims, **characterized in that**:
- the tag (A) sends, to the reader (B), a first (x) and a second (y) item of data from the tag, and a first combination (C(Sᵢ, x)) calculated using the first item of data (x) and a current secret value (Sᵢ) of the tag,
- the reader (B) recalculates the first combination using the first item of data (x) received from the tag and a current secret value (S'ᵢ) of the reader, and, if there is a match with the first combination received from the tag, sends to the tag, in step a):
• a second combination (C(S'_{i,} y)) calculated using the second item of data (y) received from the tag and the current secret value (S'ᵢ) of the reader,
• and a third item of data (z) from the reader,
- the tag (A) recalculates, in step b), the second combination using the second item of data (y) from the tag and the current secret value (Sᵢ) of the tag, and, if there is a match with the second combination received from the reader:
• replaces its current secret value (Sᵢ) with a new pseudorandom value (Sᵢ₊₁) that immediately follows the current value (Sᵢ) in said sequence, and
• sends, to the reader, a third combination (C(Sᵢ₊₁, z)) calculated using the third item of data (z) received from the reader and the new current secret value (Sᵢ₊₁) of the tag,
- the reader (B):
• determines a new secret value (S'ᵢ₊₁) corresponding to a pseudorandom value that immediately follows the current secret value (S'ᵢ) of the reader in said sequence,
• recalculates the third combination using the third item of data (z) from the reader and the new determined secret value (S'ᵢ₊₁) of the reader, and, if there is a match with the third combination received from the tag, replaces the current secret value (S'ᵢ) of the reader with the new determined secret value (S'ᵢ₊₁).

7. Method according to Claim 6, **characterized in that** the first (x) and second (y) items of data, at least (z), are randoms, and **in that** the first (x) and second (y) items of data are obtained using the first pseudorandom generator.

8. Electronic tag, **characterized in that** it includes a first pseudorandom generator designed to determine a new current secret value (Sᵢ₊₁), as a substitute for an old value (Sᵢ), in order to implement the method according to one of Claims 1 to 7.

9. System, **characterized in that** it includes a tag according to Claim 8, in order to implement the method according to one of Claims 1 to 7.

10. Computer program comprising instructions for implementing the method according to any one of Claims 1 to 7 when said instructions are executed by a processor.
